# EUROPEAN PATENT SPECIFICATION

(11) **EP 3 537 064 B1**
(45) Date of publication and mention of the grant of the patent: **07.06.2023**
(21) Application number: 19161556.6
(22) Date of filing: 08.03.2019
(51) Int. Cl.: F25B 30/02, F25B 39/04, F25B 49/02

(54) **INDOOR APPARTUS OF AIR-CONDITIONING SYSTEM WITH REDUCED REFRIGERANT NOISE**
INNENRAUMVORRICHTUNG EINES KLIMATISIERUNGSSYSTEMS MIT REDUZIERTEM KÄLTEMITTELLÄRM
APPAREIL D'INTÉRIEUR D'UN SYSTÈME DE CLIMATISATION AVEC RÉDUCTION DE BRUIT DE RÉFRIGÉRANT

(30) Priority: 09.03.2018 KR 20180027803
(43) Date of publication of application: 11.09.2019
(73) Proprietor: LG Electronics Inc., Seoul 07336 (KR)
(72) Inventor: KIM, Seung Yup, 08592 Seoul (KR); LEE, Youngjun, 08592 Seoul (KR); JEONG, Jaeeun, 08592 Seoul (KR); LEE, Dongsoo, 08592 Seoul (KR)
(74) Representative: Vossius & Partner Patentanwälte Rechtsanwälte mbB

(56) References cited:
- EP-A1- 0 883 048
- EP-A1- 2 557 377
- WO-A1-2015/155706

## Description

### BACKGROUND

### 1. Technical Field

The present invention relates to an indoor apparatus suitable for being operated in an air-conditioning system.

The inventive indoor apparatus is capable of providing both of a reduced refrigerant noise level and an improved performance.

### 2. Description of the Related Art

An air-conditioning system controls an indoor temperature via discharging cold air into an indoor space to create a more comfortable indoor environment to humans. Further, the air-conditioning system purifies indoor air to provide a user with fresh indoor air.

In general, the air-conditioning system includes an indoor apparatus installed indoors and having an indoor heat exchanger, and an outdoor apparatus having a compressor and an outdoor heat exchanger. The outdoor apparatus supplies refrigerant to the indoor apparatus. In the air-conditioning system, the indoor apparatus and the outdoor apparatus are individually controlled. The air-conditioning system operates such that power fed to the compressor or the heat exchanger is controlled.

The air-conditioning system may include one or more indoor apparatus connected to a single outdoor apparatus. Specifically, one indoor apparatus may be connected to one outdoor apparatus. Alternatively, a plurality of indoor apparatuses may be connected to one outdoor apparatus. The air-conditioning system having this configuration may supply the refrigerant to the indoor apparatus based on a signal inputted from the user such that the system operates in a cooling or heating mode.

Refrigerant may be compressed by the compressor of the outdoor apparatus. The compressed refrigerant is supplied through a first refrigerant conduit to the indoor apparatus and then flows into the heat-exchanger of the indoor apparatus. Subsequently, the refrigerant is heat-exchanged with indoor air at the heat-exchanger of the indoor apparatus and then is discharged from the heat exchanger to a second refrigerant conduit which is connected to the outdoor apparatus.

WO 2015/155706 A1 relates to an air-conditioning system, and more in particular a system for air- conditioning environments of ships, yachts, watercraft, etc.

EP 2 557 377 Al relates to air-conditioning and hot water supply combination systems capable of simultaneously executing an air-conditioning operation (cooling operation, heating operation) and a hot water supply operation.

EP 0 883 048 A1 relates to monitoring the operation of a heating or cooling system, and more specifically to monitoring the level of refrigerant charge present in the refrigeration circuit of any such system.

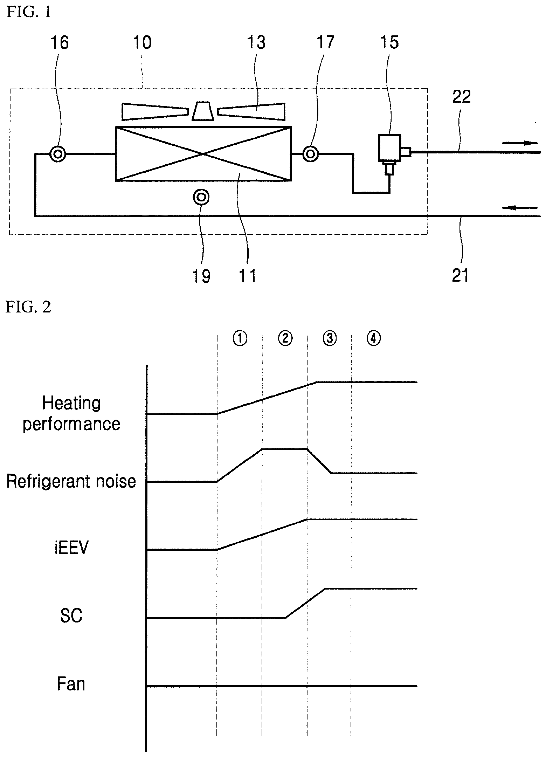

FIG. 1 is a schematic illustration of a conventional indoor apparatus of an air-conditioning system.

The conventional indoor apparatus 10 of the air-conditioning system includes a heat-exchanger 11, a fan 13 for flowing air, an expansion valve 15 for expanding refrigerant discharged from the heat-exchanger 11, and temperature sensors 16 and 17 for sensing inlet and outlet temperatures of the indoor heat-exchanger 11 respectively.

A first conduit 21 and a second conduit 22 are connected to an inlet and an outlet of the indoor apparatus 10 respectively. The first conduit 21 supplies condensed refrigerant from the compressor of the outdoor apparatus to the indoor apparatus 10. Meanwhile, the second conduit 22 supplies the refrigerant from the heat-exchanger 11 to the outdoor apparatus.

FIG. 2 is a graph of a supercool (SC), an opening-degree of an expansion valve, a suctioned refrigerant superheat, and an operation of a fan in multiple durations in a conventional indoor apparatus of an air-conditioning system.

As shown in FIG. 2, in a duration ①, an opening degree of an expansion valve (iEEV) increases to increase a refrigerant flow rate to improve a heating performance. In a duration (2), a refrigerant noise level is maximized until a supercool (SC) rises up. In a duration (3), the supercool (SC) rises up and the refrigerant noise level decreases. In this duration, the opening degree of the expansion valve (iEEV) is maintained at the increased state. In a duration ④ is a stabilization duration in which the refrigerant noise level is lowered.

However, in the conventional indoor apparatus of the air-conditioning system, in order to reduce the refrigerant noise level in the heating mode, only the expansion valve is used. The expansion valve plays a role in controlling the refrigerant flow-rate. Thus, this conventional approach leads to lowered heating performance.

One prior art approach related to the present disclosure is disclosed in Korean Patent Application Publication No. 10-2004-0090326 in which refrigerant flow noise is suppressed in an indoor apparatus. In this patent document, in order to suppress refrigerant flow noise resulting from a pressure difference between conduits at an initial startup of the indoor apparatus, when the cooling operation or the heating operation is selected by the user, a louver of the indoor apparatus is opened and then an indoor fan and an electronic expansion valve simultaneously work. In this approach, the refrigerant flow noise caused by the pressure difference between the conduits at a time of opening of the electronic expansion valve is mixed into air flow noised from the indoor fan. Thus, according to Korean Patent Application Publication No. 10-2004-0090326, the refrigerant noise level is not audible due to the fan noise level. Thus, this prior art approach does not reduce the refrigerant noise level.

Another prior art approach related to the present disclosure is disclosed in Korean Patent Application Publication No. 10-2004-0040766 providing a refrigerant flow noise level reduction device for an air conditioning system. In this document, the refrigerant flow noise level reduction device is configured to suppress vibration of the refrigerant flow by applying an anti-vibration spring to an expansion valve. This refrigerant flow noise level reduction device may be applied to the air conditioner system for the vehicle to achieve comfortable drive and improve commerciality of the vehicle. However, this refrigerant flow noise level reduction device may not be applied to the indoor apparatus of the air-conditioning system in order to improve the heating performance and reduce the refrigerant noise level.

Still another prior art approach related to the present disclosure is disclosed in Korean Patent Application Publication No. 10-2006-0087228 providing a noise suppresser of an indoor apparatus with a bundle of fluid-channels. According to this prior art document, refrigerant is divided into a plurality of flow paths to minimize a refrigerant noise level. However, this approach may not achieve heating performance improvement and refrigerant noise level reduction at the same time using refrigerant cycle control.

Therefore, it is necessary to develop an indoor apparatus of an air-conditioning system which can reduce the refrigerant noise level while maintaining the heating performance, and a control method of the indoor apparatus.

### DISCLOSURE

### 1. Technical Purposes

The purpose of the present invention is to provide an indoor apparatus for an air-conditioning system, as defined by appended independent claim 1, in which a refrigerant noise level is reduced while a heating performance is maintained.

### 2. Technical Solutions

The invention is defined by the features of independent claim 1. The dependent claims relate to preferred embodiments.

The present invention, as defined by appended independent claim 1, provides an indoor apparatus for an air-conditioning system in which a refrigerant noise level is reduced while a heating performance is maintained.

The present invention provides an indoor apparatus, suitable for being operated with a reduced refrigerant noise level in an air-conditioning system, wherein the apparatus inter alia includes: a heat-exchanger for exchanging heat between refrigerant and indoor air; a fan rotating to flow air to the heat-exchanger; and an expansion valve for expanding refrigerant discharged from the heat-exchanger, the indoor apparatus being characterized in that the apparatus further includes: a first temperature sensor disposed on a first conduit for supplying refrigerant to the heat-exchanger, wherein the first temperature sensor detects a first temperature of refrigerant to be fed into the heat-exchanger; a second temperature sensor disposed on a second conduit for receiving refrigerant from the heat-exchanger, wherein the second temperature sensor detects a second temperature of refrigerant discharged from the heat-exchanger; a third temperature sensor disposed on a housing of the indoor apparatus for detecting a discharge temperature of the indoor apparatus; and a controller configured for estimating a load of the indoor apparatus based on the discharge temperature detected by the third temperature sensor, and for increasing or decreasing an air flow rate of the fan based on the estimated load.

In one implementation, the third temperature sensor is disposed adjacent to the fan. Thus, the discharge temperature of the indoor apparatus may be more accurately detected. In one implementation, the first temperature sensor is located adjacent to an inlet of the heat-exchanger, wherein the second temperature sensor is located adjacent to an outlet of the heat-exchanger. Thus, the temperature of the refrigerant to flow into the heat exchanger may be accurately measured by the first temperature sensor. The second temperature sensor may accurately measure the temperature of the refrigerant discharged from the heat exchanger. In one implementation, the expansion valve is disposed on the second conduit for receiving refrigerant from the heat-exchanger and discharging refrigerant toward an outdoor apparatus in the air-conditioning system, wherein the expansion valve is disposed downstream of the second temperature sensor. According to the present invention, the apparatus further includes a fourth temperature sensor for detecting a temperature of air inside the indoor apparatus. The fourth temperature sensor is disposed adjacent to the first conduit such that the heat-exchanger is interposed between the fan and the fourth temperature sensor. Thus, due to the inclusion of the third temperature sensor for detecting the discharge temperature, the number of the repetitions of activation/deactivation of the indoor apparatus for stabilizing the heating performance may be minimized, thereby shortening the time duration required for stabilizing the heating operation, and reducing the refrigerant noise level resulting from the activation/deactivation.

### 3. Technical Effects

According to the configuration and an associated operation of the indoor apparatus of the air-conditioning system in accordance with the present invention as defined by appended independent claim 1, the discharge temperature of the indoor apparatus is detected and then the rotation speed of the fan is controlled based on the discharge temperature to increase the heat amount exchanged between the refrigerant and indoor air. Thus, the supercool increases and thus the refrigerant noise level decreases.

Further, the number of the repetitions of activation/deactivation of the indoor apparatus for stabilizing the heating performance may be minimized, thereby shortening the time duration required for stabilizing the heating operation, and reducing the refrigerant noise level resulting from the activation/deactivation.

According to the configuration and operation of a control method of the indoor apparatus of the air-conditioning system in accordance with the present invention, optionally both of the opening degree of the expansion valve and the rotation speed of the fan may be controlled to adjust the heating performance and supercool. In the conventional approach, the supercool is controlled only using the expansion valve. However, in the present approach, both of the expansion valve and the fan may be controlled to achieve the heating performance improvement and refrigerant noise level reduction.

Further specific effects of the present invention, as defined by appended independent claim 1, as well as the effects as described above will be described in conduction with illustrations of specific details for carrying out the invention.

### BRIEF DESCRIPTION OF DRAWINGS

FIG. 1 is a schematic illustration of a conventional indoor apparatus of an air-conditioning system.
FIG. 2 shows a graph of a relationship between a heating performance, a refrigerant noise level, an opening degree of an expansion valve, a supercool (SC), and a fan rpm in a conventional indoor apparatus of an air-conditioning system.
FIG. 3 is a schematic diagram of an indoor apparatus of an air-conditioning system according to an embodiment of the present disclosure.
FIG. 4 is a simplified block diagram of an indoor apparatus of an air-conditioning system according to an embodiment of the present disclosure.
FIG. 5 is a graph of a relationship between a heating performance, a refrigerant noise level, an opening degree of an expansion valve, a supercool (SC), and a fan rpm in an indoor apparatus of an air-conditioning system according to an embodiment of the present disclosure.
FIG. 6 is a flowchart of a method for controlling an indoor apparatus of an air-conditioning system according to the embodiment of the present disclosure.
FIG. 7 is a graph of a supercool control cycle in a conventional indoor apparatus of an air-conditioning system.
FIG. 8 is a graph of a supercool control cycle in an indoor apparatus of an air-conditioning system according to an embodiment of the present disclosure.

### DETAILED DESCRIPTION

The above objects, features and advantages will become apparent from the detailed description with reference to the accompanying drawings. Embodiments are described in sufficient detail to enable those skilled in the art in the art to easily practice the technical idea of the present invention.

Detailed descriptions of well-known functions or configurations may be omitted in order not to unnecessarily obscure the gist of the present disclosure. Throughout the drawings, like reference numerals refer to like elements. As used herein, the singular forms "a" and "an" are intended to include the plural forms as well, unless the context clearly indicates otherwise. It will be further understood that the terms "comprises", "comprising", "includes", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of the associated listed items.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

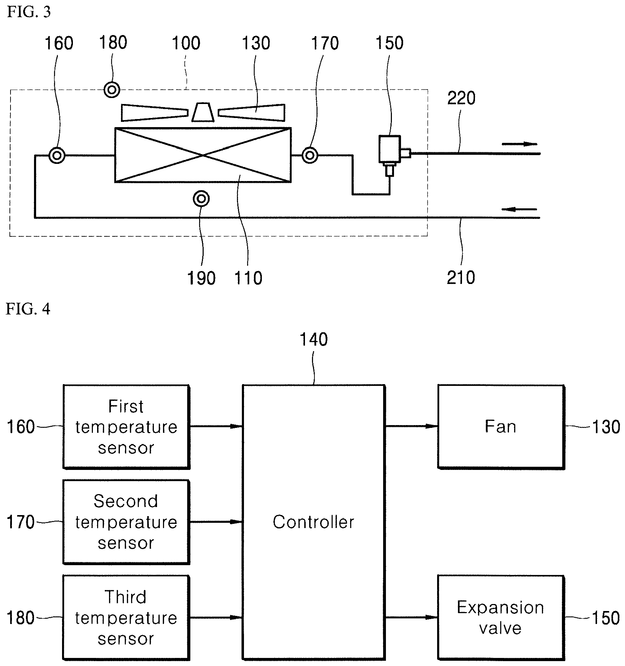

FIG. 3 is a schematic diagram of an indoor apparatus of an air-conditioning system according to an embodiment of the present disclosure. FIG. 4 is a simplified block diagram of an indoor apparatus of an air-conditioning system according to an embodiment of the present disclosure.

As shown in FIG. 3 and FIG. 4, an indoor apparatus 100 of an air-conditioning system according to an embodiment of the present invention, as defined by appended independent claim 1, inter alia at least includes a heat exchanger 110, a fan 130, an expansion valve 150, a first temperature sensor 160, a second temperature sensor 170, a third temperature sensor 180, and a fourth temperature sensor 190.

The air-conditioning system controls an indoor temperature to create a comfortable indoor environment and may purify indoor air to provide a user with fresh indoor air.

The air-conditioning system includes an indoor apparatus 100 (see FIG. 3) installed indoors and an outdoor apparatus (not shown) including a compressor (not shown) for supplying refrigerant to the indoor apparatus 100. The indoor and outdoor apparatuses may be individually controlled.

In one example, the air-conditioning system includes one or more indoor apparatus connected to a single outdoor apparatus. Specifically, one indoor apparatus may be connected to one outdoor apparatus. Alternatively, a plurality of indoor apparatuses may be connected to one outdoor apparatus. The air-conditioning system having this configuration may supply the refrigerant to the indoor apparatus based on a signal inputted from the user such that the system operates in a cooling or heating mode.

Although not shown, the refrigerant is compressed by the compressor of the outdoor apparatus.

The compressed refrigerant is supplied through a first refrigerant conduit 210 to the indoor apparatus 100 and then flows into the heat-exchanger 110 of the indoor apparatus 100.

Subsequently, the refrigerant is heat-exchanged with indoor air at the heat-exchanger 110 of the indoor apparatus 100 and then is discharged from the exchanger 110 to a second refrigerant conduit 220 which is connected to the outdoor apparatus. Via the heat exchange with the compressed refrigerant and indoor air at the heat-exchanger 110, the indoor apparatus 100 may allow the indoor air to be heated up.

Details of the indoor apparatus 100 of the air-conditioning system according to an embodiment of the present disclosure will be described with reference to FIGS. 3 and 4.

The heat-exchanger 110 acts to exchange heat between the refrigerant and the indoor air.

The fan 130 is a device that rotates to force air to flow to the heat-exchanger 110 where the refrigerant is introduced and discharged. Preferably, the fan 130 may be configured to be capable of adjusting a rotating speed, i.e., rpm thereof. Within the framework of the present invention, in any case, the air flow rate generated by the fan is adjustable.

The expansion valve 150 serves to expand the refrigerant discharged from the heat-exchanger 110.

The first temperature sensor 160 detects a first temperature of the refrigerant to flow into the heat-exchanger 110 of the indoor apparatus 100. That is, the first temperature sensor 160 detects the temperature of the refrigerant which flowed out of the outdoor apparatus and will flow into the heat-exchanger 1100 of the indoor apparatus 100. More specifically, the first temperature sensor 160 is installed on the first conduit that supplies the refrigerant to the heat-exchanger 110. In one example, the first temperature sensor 160 may be located close to an inlet of the heat-exchanger 110. Accordingly, the first temperature sensor 160 may more accurately detect the temperature of the refrigerant to be fed into the heat-exchanger 110.

The second temperature sensor 170 detects a second temperature of the refrigerant which has been discharged from the heat-exchanger 110. That is, the second temperature sensor 170 detects the temperature of the refrigerant which flowed out of the heat-exchanger 110 and will flow into the compressor of the outdoor apparatus. More specifically, the second temperature sensor 170 is installed on the second conduit to receive the refrigerant from the heat-exchanger 110. In one example, the second temperature sensor 170 may be located close to an outlet of the heat-exchanger 110. Accordingly, the second temperature sensor 170 may more accurately detect the temperature of the refrigerant to be fed from the heat-exchanger 110 through the expansion valve 150 to the compressor of the outdoor apparatus.

Then, the first and second temperature sensors 163 transmit the measured first and second temperatures to the controller 140.

The third temperature sensor 180 detects an discharge temperature of the indoor apparatus 100. The third temperature sensor 180 is installed on an outer casing of the indoor apparatus 100 as shown in FIG. 3.

Then, the third temperature sensor 180 transmits the measured discharge temperature to the controller 140. Thus, the controller 140 predicts a load of the indoor apparatus 100 using the discharge temperature detected by the third temperature sensor 180. Then, a rotational speed, that is, rpm, of the fan 130 may be controlled by the controller 140 based on the load, where, in any embodiment according to the present invention, the controller is configured to, corresponding to the determined load, increase or decrease a flow rate of the fan 130.

More specifically, the third temperature sensor 180 may be located proximate the fan 130.

The third temperature sensor 180 may be disposed at a position close to a distal end of a blade of the fan 130 to more accurately detect the discharge temperature.

In this connection, the expansion valve 150 is installed on the second conduit receiving the refrigerant from the heat-exchanger 110 and discharging the refrigerant toward the outdoor apparatus. The expansion valve 150 may be installed downstream of the second temperature sensor 170 and may be received in a housing of the indoor apparatus 100.

The apparatus 100 further includes the fourth temperature sensor 190. The fourth temperature sensor 190 detects a temperature of air inside the indoor apparatus 100.

The fourth temperature sensor 190 is installed adjacent to the conduit to supply the refrigerant to the heat-exchanger 110, and adjacent to the heat-exchanger 110. More specifically, the fourth temperature sensor 190 may be installed in an empty space in the housing of the indoor apparatus 100, where, in any embodiment of the present invention, the heat exchanger 110 is interposed between the fan 30 and the fourth temperature sensor 190.

The controller 140 (see FIG. 4) controls a rotation speed (rpm) of the fan 130 and control an opening degree of the expansion valve 150. That is, the controller 140 may increase or decrease the opening degree of the expansion valve 150.

Specifically, the controller 140 (see FIG. 4) may use the first temperature of the refrigerant as measured by the first temperature sensor 160, and the second temperature of the refrigerant as measured by the second temperature sensor 162 to calculate the supercool. That is, in a heating mode, the first temperature of refrigerant to be supplied to the heat-exchanger 110 is detected by the first temperature sensor 160, and the second temperature of the refrigerant discharged from the heat exchanger 110 is detected by the second temperature sensor 170. Then, the controller 140 calculates the supercool (SC) based on the first and second temperatures detected by the first and second temperature sensors 160 and 170 respectively. Then, the controller 140 may increase or decrease the opening degree of the expansion valve 150 based on the calculated supercool (SC).

The controller 140 according to the present invention, is configured to increase or decrease the air flow, i.e. for example the rotational speed (rpm), of the fan 130 based on the discharge temperature of the indoor apparatus 100 as detected by the third temperature sensor 180.

In this way, the controller 140 may control the expansion valve 150 and fan 130 concurrently such that the heating performance may be improved and the refrigerant noise level may be reduced compared with the conventional approach.

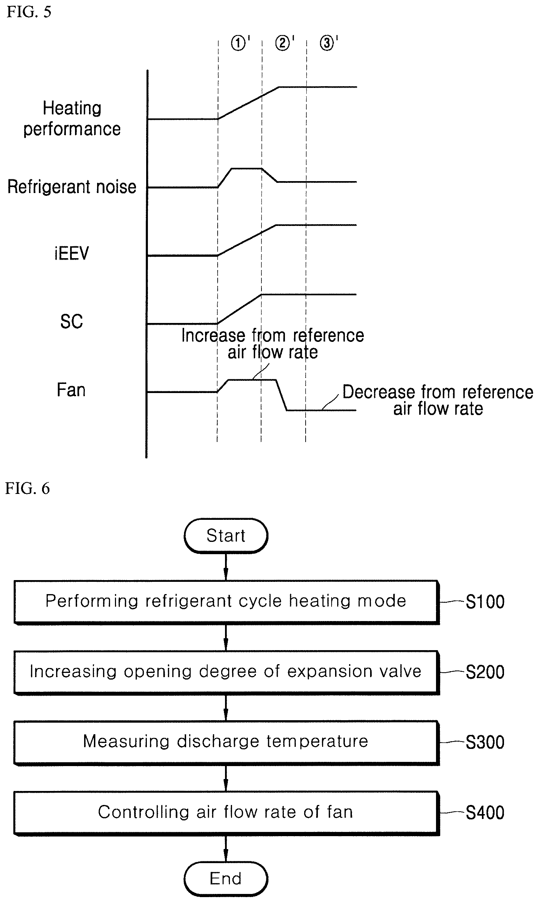

FIG. 5 is a graph of a relationship between a heating performance, a refrigerant noise level, an opening degree of an expansion valve, a supercool (SC), and a fan rpm in an indoor apparatus of an air-conditioning system according to an embodiment of the present disclosure.

In a duration ①', a flow rate of the refrigerant increases by increasing an opening degree of the expansion valve (iEEV), thereby to increase the heating performance. In the duration ①', an opening degree of the expansion valve (iEEV) is increased, and an air flow rate of the fan is greater than a reference air flow rate. This increases supercool (SC). As a result, stabilization of the heating performance is accelerated. However, a refrigerant noise level is slightly increased or maintained.

Then, in a duration ②', the supercool (SC) is increased, which may result in a reduction of the refrigerant noise level. That is, stabilization of the heating performance may be accelerated and the heating performance may be satisfied.

Next, in a duration (3)', an operation of the indoor apparatus is stabilized. An air flow rate of the fan is controlled to be lower than the reference air flow rate. Thus, according to an embodiment of the present disclosure, the refrigerant noise level is reduced and the heating performance may be improved. Further, a time duration required to stabilize the heating performance is shortened.

FIG. 6 is a flowchart of a method for controlling an indoor apparatus of an air-conditioning system, where this method may be practised on an air conditioning system using the indoor unit of the present invention.

The method for controlling the indoor apparatus of the air-conditioning system includes a refrigerant cycle heating mode operation S100, an expansion valve opening degree increasing operation S200, an discharge temperature measurement operation S300, and a fan air flow rate control operation S400.

Conventionally, a way to reduce the refrigerant noise level in the heating mode was to control the expansion valve only. However, the expansion valve further acts to control the flow rate of the refrigerant. Thus, the heating performance may be lowered.

The discharge temperature of the indoor apparatus is detected and, then, the air flow rate of the fan is adjusted to increase or decrease a heat amount exchanged between the refrigerant and the indoor air at the heat exchanger based on the detected discharge temperature. That is, the expansion valve is responsible for controlling the flow rate of refrigerant, while the exchanged heat amount and supercool controls are enabled by adjusting the rotation speed of the fan and the opening degree of the expansion valve. Further, an accuracy of a current thermal load prediction may be improved by measuring the discharge temperature of the indoor apparatus directly.

First, the refrigerant may be supplied to the indoor apparatus 100 (see FIG. 3) to perform the heating mode S100.

In the heating mode of the indoor apparatus 100 (see FIG. 3), the flow rate of the refrigerant may be controlled by increasing or decreasing an opening degree of the expansion valve 150 (see FIG. 3) S200.

Next, the discharge temperature of the indoor apparatus 100 (see FIG. 3) may be detected using the third temperature sensor 180 (see FIG. 3). Thus, the controller may predict the load of the indoor apparatus 100 (see FIG. 3) based on the discharge temperature of the indoor apparatus 100 S300.

Subsequently, the heat amount exchanged between the refrigerant and indoor air in the heat-exchanger 110 (see FIG. 3) may be increased or decreased based on the discharge temperature of the indoor apparatus detected at the third temperature sensor 180 (see FIG. 3). That is, the controller 140 increases or decreases the rotational speed (rpm) of the fan 130 (see FIG. 3) to add a certain air flow rate to the reference air flow rate or subtract a certain air flow rate from the reference air flow rate S400. This may increase or decrease the heat amount exchanged between the refrigerant and the indoor air.

In the heating mode, the first temperature sensor 160 (see FIG. 3) detects the first temperature of the refrigerant to be supplied to the heat-exchanger 110 (see FIG. 3). The second temperature sensor 170 (see FIG. 3) detects the second temperature of the refrigerant discharged from the heat-exchanger 110 (see FIG. 3). Then, the controller 140 may calculate supercool (SC) of refrigerant based on the first and second temperatures. Then, the controller 140 may increase or decrease an opening degree of the expansion valve 150 (see FIG. 3) based on the calculated supercool.

In one example, when the air flow rate of the fan 130 (see FIG. 3) is increased, the heat amount exchanged between the indoor air and refrigerant in the heat-exchanger 110 (see FIG. 3) may be increased to increase the supercool (SC). Thus, the refrigerant noise level may be reduced via liquefaction of the refrigerant.

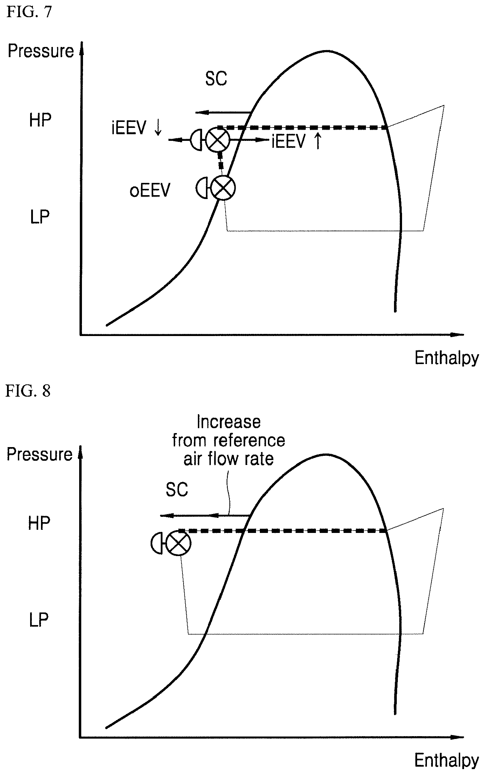

FIG. 7 is a graph of a supercool control cycle in a conventional indoor apparatus of an air-conditioning system. FIG. 8 is a graph of a supercool control cycle in an indoor apparatus of an air-conditioning system according to an embodiment of the present disclosure.

The larger the supercool SC, the more likely the refrigerant will be liquefied. In this connection, because the liquid refrigerant has a high density and has a low flow rate and is free of air bubbles, the liquid refrigerant may be effective to reduce the refrigerant noise level.

However, the conventional indoor apparatus of the air-conditioning system (see FIG. 7) controls the supercool (SC) only using the expansion valve (iEEV). In this connection, the expansion valve (iEEV) is responsible for controlling the flow rate of the refrigerant. Thus, the expansion valve (iEEV) may not be effective to provide both of a function of reducing the refrigerant noise level and a function of improving the heating performance.

In the indoor apparatus (see FIG. 8) of the air-conditioning system according to an embodiment of the present invention, as defined by appended independent claim 1, the rotational speed (i.e., rpm) of the fan may be increased or decreased such that a predetermined air flow rate is added to the reference air flow rate or the predetermined air flow rate is subtracted from the reference air flow rate.

When the predetermined air flow rate is added to the reference air flow rate, the exchanged heat amount may increase and thus the supercool (SC) of the refrigerant may increase, as shown in FIG. 8, so that the refrigerant may become liquefied. Thus, the refrigerant noise level may be reduced.

In addition, the increase of the supercool (SC) of the refrigerant may assist in the flow-rate control function of the refrigerant as a main function of the expansion valve (iEEV), thereby improving the heating performance.

The controller 140 may be implemented in a software, hardware, and a combination thereof. Thus, the operations of the method as described in connection with the embodiments disclosed herein are executed by the controller 140.

According to the configuration and operation of the indoor apparatus of the air-conditioning system, the discharge temperature of the indoor apparatus may be detected and then the rotation speed of the fan may be controlled based on the discharge temperature to increase the heat amount exchanged between the refrigerant and indoor air. Thus, the supercool may increase and thus the refrigerant noise level may decrease. Further, the number of the repetitions of activation/deactivation of the indoor apparatus for stabilizing the heating performance may be minimized, thereby shortening the time duration required for stabilizing the heating operation, and reducing the refrigerant noise level resulting from the activation/deactivation.

Both of the opening degree of the expansion valve and the rotation speed of the fan may be controlled to adjust the heating performance and supercool. In the conventional approach, the supercool (SC) is controlled only using the expansion valve (iEEV). However, in the present approach, both of the expansion valve and the fan may be controlled to achieve the heating performance improvement and refrigerant noise level reduction.

Although the present disclosure has been described with reference to the embodiments and the drawings illustrating the present disclosure, the present invention is not limited to the embodiments and drawings as disclosed in the present specification. It will be apparent that various modifications may be made by those skilled in the art within the scope of the present invention as defined by appended independent claim 1.

## Claims

1. An indoor apparatus (100), suitable for being operated with a reduced refrigerant noise level in an air-conditioning system, wherein the indoor apparatus (100) includes:
a heat-exchanger (110) for exchanging heat between refrigerant and indoor air;
a fan (130) rotating to provide air to flow to the heat-exchanger (110); and
an expansion valve (150) for expanding refrigerant discharged from the heat-exchanger (110),
wherein the indoor apparatus (100) further includes:
a first temperature sensor (160) disposed on a first conduit (210) for supplying refrigerant to the heat-exchanger (110), wherein the first temperature sensor (160) detects a first temperature of refrigerant to be fed into the heat-exchanger (110);
a second temperature sensor (170) disposed on a second conduit (220) for receiving refrigerant from the heat-exchanger (110), wherein the second temperature sensor (170) detects a second temperature of refrigerant discharged from the heat-exchanger (110);
a third temperature sensor (180) disposed on a housing of the indoor apparatus (100) for detecting a discharge temperature of the indoor apparatus (100); and
a controller (140) configured for estimating a load of the indoor apparatus (100) based on the discharge temperature detected by the third temperature sensor (180), and for increasing or decreasing an air flow rate of the fan (130) based on the estimated load,
the indoor apparatus (100) being **characterized in that**
the indoor apparatus (100) further includes a fourth temperature sensor (190) for detecting a temperature of air inside the indoor apparatus (100), and
wherein the fourth temperature sensor (190) is disposed adjacent to the first conduit (210) such that the heat-exchanger (110) is interposed between the fan (130) and the fourth temperature sensor (190).

2. The indoor apparatus (100) of claim 1, wherein the third temperature sensor (180) is disposed adjacent to the fan (130).

3. The indoor apparatus (100) of claim 1 or 2, wherein the first temperature sensor (160) is located adjacent to an inlet of the heat-exchanger (110),
wherein the second temperature sensor (170) is located adjacent to an outlet of the heat-exchanger (110).

4. The indoor apparatus (100) of any one of claims 1 to 3, wherein the expansion valve (150) is disposed on the second conduit (220) for receiving refrigerant from the heat-exchanger (110) and discharging refrigerant toward an outdoor apparatus in the air-conditioning system, wherein the expansion valve (150) is disposed downstream of the second temperature sensor (170).

## Patentansprüche

1. Raumluftvorrichtung (100), die zum Betrieb mit einem reduzierten Kältemittelschallpegel in einer Klimaanlage geeignet ist, wobei die Raumluftvorrichtung (100) aufweist:
einen Wärmetauscher (110) zum Austauschen von Wärme zwischen Kältemittel und Raumluft;
einen Lüfter (130), der so dreht, dass er Luft bereitstellt, um zum Wärmetauscher (110) zu strömen; und
ein Expansionsventil (150) zum Expandieren von Kältemittel, das aus dem Wärmetauscher (110) abgegeben wird,
wobei die Raumluftvorrichtung (100) ferner aufweist:
einen ersten Temperatursensor (160), der an einer ersten Leitung (210) zum Zuführen von Kältemittel zum Wärmetauscher (110) angeordnet ist, wobei der erste Temperatursensor (160) eine erste Temperatur von Kältemittel detektiert, das in den Wärmetauscher (110) einzuspeisen ist;
einen zweiten Temperatursensor (170), der an einer zweiten Leitung (220) zum Aufnehmen von Kältemittel vom Wärmetauscher (110) angeordnet ist, wobei der zweite Temperatursensor (170) eine zweite Temperatur von Kältemittel detektiert, das vom Wärmetauscher (110) abgegeben wird;
einen dritten Temperatursensor (180), der an einem Gehäuse der Raumluftvorrichtung (100) angeordnet ist, zum Detektieren einer Abgabetemperatur der Raumluftvorrichtung (100); und
eine Steuerung (140), die zum Schätzen einer Last der Raumluftvorrichtung (100) auf der Grundlage der durch den dritten Temperatursensor (180) detektierten Abgabetemperatur und zum Erhöhen oder Verringern einer Luftströmungsgeschwindigkeit des Lüfters (130) auf der Grundlage der geschätzten Last konfiguriert ist, wobei die Raumluftvorrichtung (100) **dadurch gekennzeichnet ist, dass** die Raumluftvorrichtung (100) ferner einen vierten Temperatursensor (190) zum Detektieren einer Temperatur von Luft innerhalb der Raumluftvorrichtung (100) aufweist, und
wobei der vierte Temperatursensor (190) benachbart zur ersten Leitung (210) so angeordnet ist, dass der Wärmetauscher (110) zwischen dem Lüfter (130) und dem vierten Temperatursensor (190) eingefügt ist.

2. Raumluftvorrichtung (100) nach Anspruch 1, wobei der dritte Temperatursensor (180) benachbart zum Lüfter (130) angeordnet ist.

3. Raumluftvorrichtung (100) nach Anspruch 1 oder 2, wobei der erste Temperatursensor (160) benachbart zu einem Einlass des Wärmetauschers (110) liegt,
wobei der zweite Temperatursensor (170) benachbart zu einem Auslass des Wärmetauschers (110) liegt.

4. Raumluftvorrichtung (100) nach einem der Ansprüche 1 bis 3, wobei das Expansionsventil (150) an der zweiten Leitung (220) zum Aufnehmen von Kältemittel vom Wärmetauscher (110) und Abgeben von Kältemittel zu einer Außenluftvorrichtung in der Klimaanlage angeordnet ist, wobei das Expansionsventil (150) stromabwärts vom zweiten Temperatursensor (170) angeordnet ist.

## Revendications

1. Appareil intérieur (100), adapté pour être actionné avec un niveau de bruit de réfrigérant réduit dans un système de climatisation, où l'appareil intérieur (100) inclut:
un échangeur de chaleur (110) pour échanger de la chaleur entre le réfrigérant et l'air intérieur;
un ventilateur (130) tournant pour permettre à l'air de s'écouler jusqu'à l'échangeur de chaleur (110); et
une vanne de détente (150) pour détendre le réfrigérant refoulé par l'échangeur de chaleur (110),
où l'appareil intérieur (100) inclut en outre:
un premier capteur de température (160) disposé sur un premier conduit (210) pour fournir du réfrigérant à l'échangeur de chaleur (110), où le premier capteur de température (160) détecte une première température du réfrigérant destiné à être introduit dans l'échangeur de chaleur (110);
un second capteur de température (170) disposé sur un second conduit (220) pour recevoir du réfrigérant de l'échangeur de chaleur (110), où le second capteur de température (170) détecte une seconde température du réfrigérant refoulé par l'échangeur de chaleur (110);
un troisième capteur de température (180) disposé sur un boîtier de l'appareil intérieur (100) pour détecter une température de refoulement de l'appareil intérieur (100); et
un dispositif de commande (140) configuré pour estimer une charge de l'appareil intérieur (100) sur la base de la température de refoulement détectée par le troisième capteur de température (180), et pour augmenter ou diminuer un débit d'air du ventilateur (130) sur la base de la charge estimée,
l'appareil intérieur (100) étant **caractérisé en ce que** l'appareil intérieur (100) inclut en outre un quatrième capteur de température (190) pour détecter une température de l'air à l'intérieur de l'appareil intérieur (100), et
où le quatrième capteur de température (190) est disposé de manière adjacente au premier conduit (210) de sorte que l'échangeur de chaleur (110) est interposé entre le ventilateur (130) et le quatrième capteur de température (190).

2. Appareil intérieur (100) selon la revendication 1, où le troisième capteur de température (180) est disposé de manière adjacente au ventilateur (130).

3. Appareil intérieur (100) selon la revendication 1 ou 2, où le premier capteur de température (160) est situé de manière adjacente à une entrée de l'échangeur de chaleur (110),
où le second capteur de température (170) est situé de manière adjacente à une sortie de l'échangeur de chaleur (110).

4. Appareil intérieur (100) selon l'une quelconque des revendications 1 à 3, où la vanne de détente (150) est disposée sur le second conduit (220) pour recevoir du réfrigérant depuis l'échangeur de chaleur (110) et refouler le réfrigérant vers un appareil extérieur dans le système de climatisation, où la vanne de détente (150) est disposée en aval du second capteur de température (170).
